(19) Europäisches Patentamt / European Patent Office / Office européen des brevets

(11) **EP 4 223 858 A1**

(12) **EUROPEAN PATENT APPLICATION**
published in accordance with Art. 153(4) EPC


(43) Date of publication:
**09.08.2023 Bulletin 2023/32**

(21) Application number: **21875820.9**

(22) Date of filing: **30.09.2021**

(51) International Patent Classification (IPC):
***C10M 171/00*** (2006.01) ***C10M 177/00*** (2006.01)
***C10N 20/06*** (2006.01) ***C10N 30/06*** (2006.01)
***C10N 30/10*** (2006.01) ***C10N 30/12*** (2006.01)
***C10N 30/14*** (2006.01) ***C10N 30/18*** (2006.01)
***C10N 40/02*** (2006.01) ***C10N 40/04*** (2006.01)
***C10N 40/08*** (2006.01) ***C10N 40/12*** (2006.01)
***C10N 40/16*** (2006.01) ***C10N 40/20*** (2006.01)
***C10N 40/22*** (2006.01) ***C10N 40/24*** (2006.01)
***C10N 40/25*** (2006.01) ***C10N 40/30*** (2006.01)
***C10N 50/10*** (2006.01)

(52) Cooperative Patent Classification (CPC):
**C10M 171/00; C10M 177/00;** C10N 2020/06; C10N 2030/06; C10N 2030/10; C10N 2030/12; C10N 2030/14; C10N 2030/18; C10N 2040/02; C10N 2040/04; C10N 2040/08; C10N 2040/12; C10N 2040/16; C10N 2040/20; C10N 2040/22;

(Cont.)

(86) International application number:
**PCT/JP2021/036292**

(87) International publication number:
**WO 2022/071524 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020 JP 2020166325**



(71) Applicant: **Idemitsu Kosan Co., Ltd**
**Tokyo 100-8321 (JP)**

(72) Inventors:
- **KOSHIMA, Hiroaki**
  **Sodegaura-shi, Chiba 299-0293 (JP)**
- **NAKANISHI, Yusuke**
  **Sodegaura-shi, Chiba 299-0293 (JP)**

(74) Representative: **Hoffmann Eitle**
**Patent- und Rechtsanwälte PartmbB**
**Arabellastraße 30**
**81925 München (DE)**


(54) **COMPLEX, AND METHOD FOR PRODUCING SAID COMPLEX**


(57) The present invention addresses a problem to provide a complex that contains a less-oil-soluble substance having a function as an additive for lubricating oil. Then, the problem has been solved by a solid-in-oil-type complex containing an active ingredient and a surfactant, the active ingredient being one or more less-oil-soluble substances selected from the group consisting of a hardly-oil-soluble substance and an oil-insoluble substance, the less-oil-soluble substances having a function as an additive for lubricating oil.


[Fig. 1]

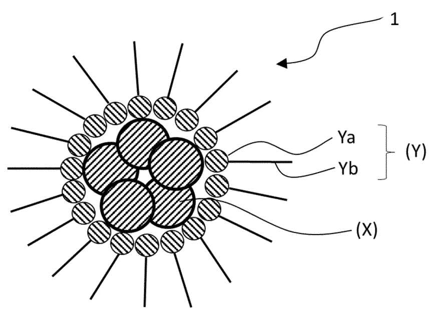


EP 4 223 858 A1

(52) Cooperative Patent Classification (CPC): (Cont.)
C10N 2040/24; C10N 2040/25; C10N 2040/30;
C10N 2050/10

## Description

### Technical Field

The present invention relates to a complex and a method of producing said complex. More particularly, the present invention relates to a complex and a method of producing said complex, an additive composition for lubricating oil containing said complex, and a lubricating oil composition containing said complex or said additive composition for lubricating oil.

### Background Art

An additive for lubricating oil is used by addition to a lubricant base oil for the purpose of imparting a property and performance needed for a lubricating oil composition or complementing or enhancing such a property and performance.

A known example of an additive for lubricating oil is a phosphoric acid ester represented by the following general formula (see, for example, Patent Literature-1). A polar group moiety (phosphate group) of a phosphoric acid ester is bound to a metal surface to form an adsorption film, which performs a function as an extreme pressure agent. Thus, an additive for lubricating oil often has a polar group moiety for performing such a function.

[Chem. 1]

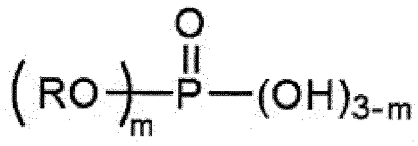

[In the general formula, m represents an integer of 1 or 2, and R represents a linear or branched hydrocarbon group having 6 to 22 carbon atoms.]

### Citation List

### Patent Literature

Patent Literature-1 : JP 2017-88651 A

### Summary of Invention

### Technical Problem

On the other hand, a polar group moiety in a molecule generally has "hydrophilicity". Thus, in order to use a substance having a polar group moiety as an additive for lubricating oil, it is required to introduce an appropriate "oleophilic group" into the substance to make the substance "oil soluble". In the phosphoric acid ester represented by the general formula shown above, the oil solubility is ensured by R which is a hydrocarbon group having 6 to 22 carbon atoms.

However, this limits substances that can be used as an additive for lubricating oil. In future, with further progress of the technologies in the fields of automobiles, industrial machines, and the like, the performance required for lubricating oil compositions is presumed to be further more challenging. Thus, from the viewpoint of expanding substances that can be used as an additive for lubricating oil to promote dramatic advancement of the technologies about additives for lubricating oil, it is desired to create an additive for lubricating oil with a hardly-oil-soluble substance and an oil-insoluble substance (hereinafter also referred to collectively as a "less-oil-soluble substance") used.

In view of the above demand, the present inventors made an intensive and extensive studies, and then, they have found that a specific complex that contains a less-oil-soluble substance having a function as an additive for lubricating oil is effective for meeting the above demand.

Thus, a problem of the present invention is to provide a complex that contains a less-oil-soluble substance having a function as an additive for lubricating oil, an additive composition for lubricating oil containing said complex, and a lubricating oil composition containing said complex or said additive composition for lubricating oil, and to further provide a method of producing said complex.

## Solution to Problem

As a result of intensive and extensive studies, the present inventors have found that a solid-in-oil-type complex that contains a less-oil-soluble substance having a function as an additive for lubricating oil can solve the above problem. Then, the present inventors have further made various studies, thus completing the present invention.
Specifically, the present invention relates to the following [1] to [6].

[1] A solid-in-oil-type complex containing an active ingredient and a surfactant,

the active ingredient being one or more less-oil-soluble substances selected from the group consisting of a hardly-oil-soluble substance and an oil-insoluble substance,
the less-oil-soluble substances having a function as an additive for lubricating oil.

[2] An additive composition for lubricating oil, containing the complex according to the above [1],
[3] A lubricating oil composition containing a lubricant base oil, the complex according to the above [1] or the additive composition for lubricating oil according to the above [2].
[4] A method of producing a solid-in-oil-type complex that contains an active ingredient and a surfactant,
the method including steps (S 1) to (S4) described below:

· step (S1): a step of subjecting the active ingredient to at least one of dissolution and dispersion in water to prepare an aqueous liquid (W);
· step (S2): a step of dissolving the surfactant in an organic solvent to prepare an oily liquid (O);
· step (S3): a step of mixing the aqueous liquid (W) and the oily liquid (O) to prepare a water-in-oil-type emulsion;
• step (S4): a step of removing the organic solvent from the water-in-oil-type emulsion, followed by drying;

the active ingredient being one or more less-oil-soluble substances selected from the group consisting of a hardly-oil-soluble substance and an oil-insoluble substance,
the less-oil-soluble substances having a function as an additive for lubricating oil.

[5] A method of using the complex according to the above [1], the complex being used as an additive for lubricating oil.
[6] A method of using the complex according to the above [1], the method including blending the complex into a lubricating oil composition.

## Advantageous Effects of Invention

According to the present invention, it is possible to provide a complex that contains a less-oil-soluble substance having a function as an additive for lubricating oil, an additive composition for lubricating oil containing the complex, and a lubricating oil composition containing the complex or the additive composition for lubricating oil, and to further provide a method of producing the complex.

## Brief Description of Drawings

Fig. 1 is a schematic cross section illustrating an aspect of the solid-in-oil-type complex of the present invention.

## Description of Embodiments

In this description, regarding a preferred numerical range (for example, a range of a content), lower limits and upper limits described stepwise can be each independently combined. For example, from the statement "preferably A to B, more preferably C to D", "a preferred lower limit (A)" and "a more preferred upper limit (D)" can be combined to make "A to D".
Unless otherwise specified, a numerical range "a lower limit to an upper limit" stated in this description means the lower limit or more and the upper limit or less.
In this description, a numerical value in Examples is a numerical value that can be used as an upper limit or a lower limit.
In this description, "solid-in-oil-type" is sometimes abbreviated as "S/O-type", and "water-in-oil-type" is sometimes abbreviated as "W/O-type".
In this description, "less-oil-soluble substance" is a concept including "hardly-oil-soluble substance" and "oil-insoluble substance" as described above. "Hardly-oil-soluble substance" is a concept including "extremely-hardly-oil-soluble substance".

Specifically, a "less-oil-soluble substance" means, when the less-oil-soluble substance is solid at a room temperature (25°C), a substance having a solubility in hexane at a room temperature (25°C) of, for example, 1 g/100 mL or less. The solubility may be 0.1 g/100 mL or less, or may be 0.01 g/100 mL or less. A less-oil-soluble substance means, when the less-oil-soluble substance is liquid at a room temperature (25°C), a substance having a solubility in hexane at a room temperature (25°C) of, for example, 1 mL/100 mL or less. The solubility may be 0.1 mL/100 mL or less, or may be 0.01 mL/100 mL or less.

In this description, "oil-soluble substance" is a concept including "slightly-oil-soluble substance", and an oil-soluble substance means, when the less-oil-soluble substance is solid at a room temperature (25°C), a substance having a solubility in hexane (n-hexane) at a room temperature (25°C) more than 1 g/100 mL (preferably 5 g/100 mL, more preferably 10 g/100 mL) An oil-soluble substance means, when the less-oil-soluble substance is liquid at a room temperature (25°C), a substance having a solubility in hexane (n-hexane) at a room temperature (25°C) more than 1 mL/100 mL (preferably 5 mL/100 mL, more preferably 10 mL/100 mL).

In this description, "less-water-soluble substance" is a concept including "hardly-water soluble substance" and "water-insoluble substance". "Hardly-water-soluble substance" is a concept including "extremely-hardly-water-soluble substance".

Specifically, a "less-water-soluble substance" means, when the less-water-soluble substance is solid at a room temperature (25°C), a substance having a solubility in water at a room temperature (25°C) of, for example, 1 g/100 mL or less. The solubility may be 0.1 g/100 mL or less, or may be 0.01 g/100 mL or less. A less-water-soluble substance means, when the less-water-soluble substance is liquid at a room temperature (25°C), a substance having a solubility in water at a room temperature (25°C) of, for example, 1 mL/100 mL or less. The solubility may be 0.1 mL/100 mL or less, or may be 0.01 mL/100 mL or less.

In this description, "water-soluble substance" is a concept including slightly-water-soluble substance. A water-soluble substance means, when the water-soluble substance is solid at a room temperature (25°C), a substance having a solubility in water at a room temperature (25°C) more than 1 g/100 mL (preferably 5 g/100 mL, more preferably 10 g/100 mL). A water-soluble substance means, when the less-water-soluble substance is liquid at a room temperature (25°C), a substance having a solubility in water at a room temperature (25°C) more than 1 mL/100 mL (preferably 5 mL/100 mL, more preferably 10 mL/100 mL).

[An aspect of the complex of the present invention]

The complex of the present invention is an S/O-type complex containing an active ingredient and a surfactant, the active ingredient is one or more less-oil-soluble substances selected from the group consisting of a hardly-oil-soluble substance and an oil-insoluble substance, and the less-oil-soluble substances are substances having a function as an additive for lubricating oil.

Fig. 1 illustrates an aspect of the S/O-type complex of the present invention.

An S/O-type complex 1 has a structure in which an active ingredient (X) is coated with a surfactant (Y).

The S/O-type complex 1 is obtained by removing an inner water phase of a W/O-type emulsion. The state of orientation of the surfactant (Y) in the S/O-type complex 1 maintains the state of orientation in the W/O-type emulsion. Accordingly, in the S/O-type complex 1, the surfactant (Y) is oriented so that a hydrophilic group (Ya) is directed toward an encapsulated substance (that is, toward the active ingredient (X)) and an oleophilic group (Yb) is directed toward the outside, in the same manner as in a W/O-type emulsion. The size of the S/O-type complex 1 is reduced by the amount of removal of the inner water phase from the W/O-type emulsion. Specifically, the S/O-type complex 1 of an aspect of the present invention has a particle diameter as determined by a dynamic light scattering method (hydrodynamic diameter) of preferably 50 nm or more, more preferably 40 nm or more, further preferably 30 nm or more. The hydrodynamic diameter is also preferably 600 nm or less, more preferably 500 nm or less, further preferably 400 nm or less.

The upper limits and the lower limits in the numerical ranges can be arbitrarily combined.

Specifically, as a first range, the hydrodynamic diameter is preferably 50 nm to 600 nm, more preferably 40 nm to 600 nm, further preferably 30 nm to 600 nm.

As a second range, the hydrodynamic diameter is preferably 50 nm to 500 nm, more preferably 40 nm to 500 nm, further preferably 30 nm to 500 nm.

As a third range, the hydrodynamic diameter is preferably 50 nm to 400 nm, more preferably 40 nm to 400 nm, further preferably 30 nm to 400 nm.

When the S/O-type complex 1 of the present invention is added to a lubricant base oil, by the active ingredient (X) coated with the surfactant (Y) in the state where the oleophilic group (Yb) is directed toward the outside and by the particle diameter being a nano-size, the S/O-type complex 1 is uniformly dispersed in the lubricant base oil while maintaining the state in which the active ingredient (X) is encapsulated in the S/O-type complex 1. Thus, the active ingredient (X) in the S/O-type complex 1 becomes in the state as if the active ingredient (X) is dissolved in the lubricant base oil.

Then, the S/O-type complex 1 is disintegrated by a trigger as described later. Thus, the active ingredient (X) which is an encapsulated substance is released to allow the active ingredient (X) to perform a function as an additive for lubricating oil.

The active ingredient and the surfactant which constitute the complex of the present invention will be described in detail below.

<Active ingredient >

The active ingredient is one or more less-oil-soluble substances selected from the group consisting of a hardly-oil-soluble substance and an oil-insoluble substance, and the less-oil-soluble substances have a function as an additive for lubricating oil.

According to the present invention, it is possible to use, as an additive for lubricating oil, a less-oil-soluble substance which has not heretofore been able to be used as an additive for lubricating oil, and thus, it is possible to expand substances that can be used as an additive for lubricating oil.

One less-oil-soluble substance may be used alone or two or more less-oil-soluble substances may be used in combination.

Here, from the viewpoint of easily dissolving the less-oil-soluble substance in water to produce a complex in the process of producing the complex, the less-oil-soluble substance is preferably soluble in water. From the same point of view, the less-oil-soluble substance preferably has an octanol/water partition coefficient (log $P_{ow}$) of a negative value. The octanol/water partition coefficient can be measured, for example, according to the OECD Test Guideline ("C(81)30 final appendix 1" determined by the OECD council) 107 or the Japan Industrial Standard Z7260-107 (2000) "Partition coefficient (1-octanol/water) - Shake flask method".

However, the less-oil-soluble substance is not limited to being water soluble, and may be less water soluble. Even if the less-oil-soluble substance is less water soluble, it is possible to disperse the less-oil-soluble substance in water to produce a complex in the process of producing the complex.

The function as an additive for lubricating oil of the less-oil-soluble substance used in the complex of the present invention is not particularly limited, but an example thereof is a function of one or more selected from the group consisting of a load carrying additive, a base number enhancer, an antioxidant, a passivating agent, a rust inhibitor, a corrosion inhibitor, a self-restoring agent, a coating agent, and an anti-foaming agent.

Less-oil-soluble substances each having a function as a load carrying additive, a base number enhancer, an antioxidant, a passivating agent, a rust inhibitor, a corrosion inhibitor, a self-restoring agent, a coating agent, or an anti-foaming agent will be described in detail below with reference to specific examples.

(Load carrying additive)

As a load carrying additive, any less-oil-soluble substance that functions as an oiliness improver, an anti-wear agent, or an extreme pressure agent can be used with no particular limitation.

Specific examples of the less-oil-soluble substance that can be used as a load carrying additive include water-soluble compounds containing a P=O structure, such as a phosphoric acid compound selected from phosphoric acid (phosphate), phosphorous acid (phosphite), a phosphonate, and a phosphinate, a water-soluble ester of the phosphoric acid compound, a water-soluble condensate of the phosphoric acid compound, a water-soluble amine salt of the phosphoric acid compound, and a water-soluble metal salt of the phosphoric acid compound; water-soluble compounds containing an S=O structure, such as a sulfonic acid compound selected from a sulfonic acid, a sulfide, a sulfoxide, and a sulfone, a water-soluble ester of the sulfonic acid compound, a water-soluble condensate of the sulfonic acid compound, a water-soluble amine salt of the sulfonic acid compound, and a water-soluble metal salt of the sulfonic acid compound; water-soluble compounds containing a C=O structure, such as a carboxylic acid compound selected from a carboxylic acid, benzoic acid, and nitrobenzoic acid, a water-soluble ester of the carboxylic acid compound, a water-soluble condensate of the carboxylic acid compound, a water-soluble amine salt of the carboxylic acid compound, and a water-soluble metal salt of the carboxylic acid compound; a phosphomolybdic acid, such as 12 molybdo(VI) phosphoric acid n-hydrate and a water-soluble derivative thereof or a water-soluble salt thereof; a thiophosphate and a thiocarbamate, and water-soluble derivatives thereof or water-soluble salts thereof; and an ionic liquid.

Although all the substances described above are a water-soluble substance, a substance that can be used as a load carrying additive may be less water soluble or may be water insoluble. Specific examples of such substances include water-insoluble substances, for example, molybdenum disulfide, molybdenum oxide, and tungsten disulfide, and derivatives thereof or salts thereof; carbon compounds, such as carbon black, carbon graphite, graphene, carbon nanotube, and fullerene; and polymer compounds, such as polytetrafluoroethylene and cellulose nanofiber. A carbon compound or a polymer compound exhibits a friction reducing effect by an action as of a so-called "roller".

Among them, molybdenum disulfide, molybdenum oxide, and tungsten disulfide, and carbon black, carbon

graphite, graphene, carbon nanotube, and fullerene are substances that are classified as "insoluble substance" which is oil insoluble and water insoluble, but in the present invention, such a substance can also be encapsulated in the complex as an active ingredient.

One of the substances may be used alone or two or more thereof may be used in combination.

(Base number enhancer)

As a base number enhancer, any less-oil-soluble substance that can neutralize an acidic substance, which may be a cause of increased acidity in the case where the acidity of a lubricating oil composition increases, can be used with no particular limitation. Use of a base number enhancer contributes to, for example, improvement of long draining of engine oil.

Specific examples of the less-oil-soluble substance that can be used as a base number enhancer include a polyalkylene polyamine, a guanidine compound such as guanidine carbonate, an aminoguanidine compound such as aminoguanidine bicarbonate, arginine, phenylamine, naphthylamine, phenylenediamine, methylaniline, an imine, and water-soluble derivatives thereof; cyclic amines, such as pyridine, piperazine, piperidine, morpholine, indole, imidazole, indazole, and triazole, and water-soluble derivatives thereof; and a water-soluble inorganic metal compound, such as potassium carbonate.

Although all the substances described above are a water-soluble substance, the substance that can be used as a base number enhancer may be less water soluble or may be water insoluble. Specific examples of such substances include inorganic metal compounds, such as barium carbonate, calcium carbonate, and magnesium carbonate. The inorganic metal compound is a substance that is classified as "insoluble substance" which is oil insoluble and water insoluble, but in the present invention, such a substance can also be encapsulated in the complex as an active ingredient.

One of the substances may be used alone or two or more thereof may be used in combination.

(Antioxidant)

As an antioxidant, any less-oil-soluble substance that has a function to suppress oxidative degradation of a lubricating oil composition by an action of ultraviolet ray absorption, chain reaction stoppage, peroxide decomposition, metal deactivation, and the like can be used with no particular limitation.

Specific examples of the less-oil-soluble substance that can be used as an antioxidant include catecholamine, acetylcholine, serotonin, histamine, melatonin, and water-soluble derivatives thereof; ascorbic acid, phenol, hydroxyanisole, catechin, and water-soluble derivatives thereof; a less-oil-soluble phenol-based antioxidant, such as di-tert-butylcresol; a less-oil-soluble phenol-based antioxidant, such as naphthylamine.

One of the substances may be used alone or two or more thereof may be used in combination.

(Passivating agent)

As a passivating agent, any less-oil-soluble substance that has a function to form oxide film having corrosion resistance on a metal surface can be used with no particular limitation.

Specific examples of the less-oil-soluble substance that can be used as a passivating agent include sodium nitrite, potassium sulfite, sulfur dioxide, and water-soluble derivatives thereof.

(Rust inhibitor, corrosion inhibitor)

As a rust inhibitor or a corrosion inhibitor, any less-oil-soluble substance that has a function to protect a metal surface from water and oxygen can be used with no particular limitation.

Specific examples of the substance that can be used as a rust inhibitor or a corrosion inhibitor for iron include dicyclohexylammonium nitrite, diisopropylammonium nitrite, caprate, laurate, and carbonate, and for copper include benzotriazole. In addition, examples include water-soluble rust inhibitors, such as an amine salt and a lower fatty acid and a salt thereof.

One of the substances may be used alone or two or more thereof may be used in combination.

(Self-restoring agent, coating agent)

As a self-restoring agent or a coating agent, any less-oil-soluble substance that has a function to restore fine flaws and cracks generated on a metal surface or resin surface can be used with no particular limitation.

Specific examples of the less-oil-soluble substance that can be used as a self-restoring agent or a coating agent include an epoxy resin material; a thermosetting polyketone; a self-restoring agent, such as epoxy resin; a crosslinking agent, such as an ethylene-methacrylic acid copolymer; and a coating agent, such as s polyurethane.

(Anti-foaming agent)

As an anti-foaming agent, any less-oil-soluble substance that has a function to suppress or extinguish foaming occurring in a lubricating oil composition can be used with no particular limitation.
Specific examples of the less-oil-soluble substance that can be used as an anti-foaming agent include a silicon compound, such as a silicone, a fluorine compound, and derivatives thereof.

(Another component)

An example of another component is a less-oil-soluble marker substance, such as a colorant or a fluorescent substance.
For example, when the complex is disintegrated by degradation of a lubricating oil composition acting as a trigger, by encapsulating a marker substance, such as a colorant, in the complex, the marker substance is released in disintegration of the complex to enable visual recognition of degradation of the lubricating oil composition.
In a specific example, by encapsulating a marker substance together with the aforementioned base number enhancer in the complex, it is possible to disintegrate the complex by degradation due to accumulation of an acidic substance in the lubricating oil composition, and in disintegration, the marker substance is released from the interior of the complex and the degradation is visually recognized.

<Surfactant>

Any surfactant that can coat a less-oil-soluble substance to form an S/O-type complex and that can be accepted as an additive for lubricating oil can be used with no particular limitation.
Examples thereof include a nonionic surfactant, an anionic surfactant, a cationic surfactant, and an amphoteric surfactant.
One of the surfactants may be used alone or two or more thereof may be used in combination.
By combining two or more surfactants, a film surrounding the less-oil-soluble substance formed by the surfactants can be made strong and stable.

(Nonionic surfactant)

Examples of the nonionic surfactant include one or more selected from an ester-type, an ether-type, an ester ether-type, and an alkanolamide-type surfactant.
Specific examples of the nonionic surfactant include an alkyl fatty acid ester, a glycerol fatty acid ester, a polyglycerol fatty acid ester, a polyoxyethylene glycerol fatty acid ester, a sorbitan fatty acid ester, a sucrose fatty acid ester, a polyoxyethylene sorbitol fatty acid ester, an aliphatic polyalkylene polyamine, a fatty acid amide, a polyalkylene polyamine fatty acid amide, an aminoimidazole fatty acid amide, and an aminotriazole fatty acid amide.
One of the nonionic surfactants may be used alone or two or more thereof may be used in combination.

(Anionic surfactant)

Examples of the anionic surfactant include one or more selected from a carboxylic acid-type, a sulfonic acid-type, a sulfuric acid ester-type, and a phosphoric acid ester-type surfactant.
Specific examples of the anionic surfactants include an aliphatic carboxylic acid salt, a polyoxyethylene ether carboxylic acid salt, an N-acylsarcosine acid salt, an N-acylglutamic acid salt, a dialkylsulfosuccinic acid salt, an alkanesulfonic acid salt, an $\alpha$-olefin sulfonic acid salt, an alkylbenzene sulfonic acid salt, a naphthalene sulfonic acid salt-formaldehyde condensate, an alkylnaphthalene sulfonic acid salt, an N-methyl-N-acyltaurine salt, an alkylsulfuric acid salt, a polyoxyethylene alkyl ether sulfuric acid salt, a oil-and-fat sulfuric acid ester salt, an alkyl phosphoric acid salt, a polyoxyethylene alkyl ether phosphoric acid salt, and a polyoxyethylene alkyl phenyl ether phosphoric acid salt.
One of the anionic surfactants may be used alone or two or more thereof may be used in combination.

(Cationic surfactant)

Examples of the cationic surfactant include one or more selected from an alkylamine salt-type and a quaternary ammonium salt-type surfactant.
Specific examples of the cationic surfactant include a monoalkylamine salt, a dialkylamine salt, a trialkylamine

salt, an alkyltrimethylammonium halide, a dialkyldimethylammonium halide, and an alkylbenzalconium chloride.

One of the cationic surfactants may be used alone or two or more thereof may be used in combination.

(Amphoteric surfactant)

Examples of the amphoteric surfactant include one or more selected from a carboxybetaine-type, a 2-alkylimidazoline derivative-type, a glycine-type, and an amine oxide-type surfactant.

Specific examples of the amphoteric surfactant include an alkylbetanine, a fatty acid amide propyl betaine, a 2-alkyl-N-carboxymethyl-N-hydroxyethylimidazolinium betaine, an alkyldiethylene triaminoacetic acid, a dialkyldiethylene triaminoacetic acid, and an alkylamine oxide.

One of the amphoteric surfactants may be used alone or two or more thereof may be used in combination.

(Suitable surfactant)

In one aspect of the present invention, as the surfactant, from the viewpoint of easily enhancing the stability of the S/O-type complex, one or more selected from the group consisting of a nonionic surfactant and an anionic surfactant are preferably used, and a nonionic surfactant is more preferably used.

When a nonionic surfactant is used as the surfactant, from the viewpoint of more easily enhancing the stability of the S/O-type complex, an ester-type surfactant obtained from a fatty acid having 8 to 24 carbon atoms as a raw material is preferably used.

The number of carbon atoms of the fatty acid is, from the viewpoint of more easily enhancing the stability of the S/O-type complex, more preferably 10 to 24, further preferably 12 to 24, furthermore preferably 14 to 24, and still furthermore preferably 16 to 24.

The aliphatic group constituting the fatty acid may be saturated or unsaturated. The aliphatic group may be linear or branched, but is preferably linear.

The ester-type surfactant is, from the viewpoint of more easily enhancing the stability of the S/O-type complex, preferably one or more selected from the group consisting of a glycerol fatty acid ester, a sorbitan fatty acid ester, and a sucrose fatty acid ester.

Specific examples of compounds preferred as the glycerol fatty acid ester include glycerol octanoate (number of carbon atoms of the constituting fatty acid: 8), glycerol nonanoate (number of carbon atoms of the constituting fatty acid: 9), glycerol decanoate (number of carbon atoms of the constituting fatty acid: 10), glycerol undecatnoate (number of carbon atoms of the constituting fatty acid: 11), glycerol laurate (number of carbon atoms of the constituting fatty acid: 12), glycerol tridecanoate (number of carbon atoms of the constituting fatty acid: 13), glycerol myristate (number of carbon atoms of the constituting fatty acid: 14), glycerol pentadecanoate (number of carbon atoms of the constituting fatty acid: 15), glycerol palmitate (number of carbon atoms of the constituting fatty acid: 16), glycerol margarate (number of carbon atoms of the constituting fatty acid: 17), glycerol stearate (number of carbon atoms of the constituting fatty acid: 18), glycerol oleate (number of carbon atoms of the constituting fatty acid: 18, number of double bonds: 1), glycerol nonadecanoate (number of carbon atoms of the constituting fatty acid: 19), glycerol arachidate (number of carbon atoms of the constituting fatty acid: 20), glycerol eicosenoate (number of carbon atoms of the constituting fatty acid: 20, number of double bonds: 1), glycerol heneicosanoate (number of carbon atoms of the constituting fatty acid: 21), glycerol behenate (number of carbon atoms of the constituting fatty acid: 22), glycerol erucate (number of carbon atoms of the constituting fatty acid: 22, number of double bonds: 1), glycerol tricosanoate (number of carbon atoms of the constituting fatty acid: 23), and glycerol lignocerate (number of carbon atoms of the constituting fatty acid: 24).

One of the compounds may be used alone or two or more thereof may be used in combination.

The ester value of the glycerol fatty acid is preferably 1 or 2. That is, the glycerol fatty acid ester is preferably one or more selected from the group consisting of a glycerol fatty acid monoester and a glycerol fatty acid diester.

Specific examples of compounds preferred as the sorbitan fatty acid ester include sorbitan octanoate (number of carbon atoms of the constituting fatty acid: 8), sorbitan nonanoate (number of carbon atoms of the constituting fatty acid: 9), sorbitan decanoate (number of carbon atoms of the constituting fatty acid: 10), sorbitan undecanoate (number of carbon atoms of the constituting fatty acid: 11), sorbitan laurate (number of carbon atoms of the constituting fatty acid: 12), sorbitan tridecanoate (number of carbon atoms of the constituting fatty acid: 13), sorbitan myristate (number of carbon atoms of the constituting fatty acid: 14), sorbitan pentadecanoate (number of carbon atoms of the constituting fatty acid: 15), sorbitan palmitate (number of carbon atoms of the constituting fatty acid: 16), sorbitan margarate (number of carbon atoms of the constituting fatty acid: 17), sorbitan stearate (number of carbon atoms of the constituting fatty acid: 18), sorbitan oleate (number of carbon atoms of the constituting fatty acid: 18, number of double bonds: 1), sorbitan nonadecanoate (number of carbon atoms of the constituting fatty acid: 19), sorbitan arachidate (number of carbon atoms of the constituting fatty acid: 20), sorbitan eicosenoate (number of carbon atoms of the constituting fatty acid: 20, number of double bonds: 1), sorbitan heneicosanoate (number of carbon atoms of the constituting fatty acid: 21), sorbitan

behenate (number of carbon atoms of the constituting fatty acid: 22), sorbitan erucate (number of carbon atoms of the constituting fatty acid: 22, number of double bonds: 1), sorbitan tricosanoate (number of carbon atoms of the constituting fatty acid: 23), and sorbitan lignocerate (number of carbon atoms of the constituting fatty acid: 24).

One of the compounds may be used alone or two or more thereof may be used in combination.

The ester value of the sorbitan fatty acid ester is preferably 1, 2, or 3. That is, the sorbitan fatty acid ester is preferably one or more selected from the group consisting of a sorbitan fatty acid monoester, a sorbitan fatty acid diester, and a sorbitan fatty acid triester.

Specific examples of compounds preferred as the sucrose fatty acid ester include sucrose octanoic acid ester (number of carbon atoms of the constituting fatty acid: 8), sucrose nonanoic acid ester (number of carbon atoms of the constituting fatty acid: 9), sucrose decanoic acid ester (number of carbon atoms of the constituting fatty acid: 10), sucrose undecanoic acid ester (number of carbon atoms of the constituting fatty acid: 11), sucrose lauric acid ester (number of carbon atoms of the constituting fatty acid: 12), sucrose tridecanoic acid ester (number of carbon atoms of the constituting fatty acid: 13), sucrose myristic acid ester (number of carbon atoms of the constituting fatty acid: 14), sucrose pentadecanoic acid ester (number of carbon atoms of the constituting fatty acid: 15), sucrose palmitic acid ester (number of carbon atoms of the constituting fatty acid: 16), sucrose margaric acid ester (number of carbon atoms of the constituting fatty acid: 17), sucrose stearic acid ester (number of carbon atoms of the constituting fatty acid: 18), sucrose oleic acid ester (number of carbon atoms of the constituting fatty acid: 18, number of double bonds: 1), sucrose nonadecanoic acid ester (number of carbon atoms of the constituting fatty acid: 19), sucrose arachidic acid ester (number of carbon atoms of the constituting fatty acid: 20), sucrose eicosenoic acid ester (number of carbon atoms of the constituting fatty acid: 20, number of double bonds: 1), sucrose heneicosylic acid ester (number of carbon atoms of the constituting fatty acid: 21), sucrose behenic acid ester (number of carbon atoms of the constituting fatty acid: 22), sucrose erucic acid ester (number of carbon atoms of the constituting fatty acid: 22, number of double bonds: 1), sucrose tricosanoic acid ester (number of carbon atoms of the constituting fatty acid: 23), and sucrose lignoceric acid ester (number of carbon atoms of the constituting fatty acid: 24).

One of the compounds may be used alone or two or more thereof may be used in combination.

The ester value of the sucrose fatty acid ester is preferably 1, 2, or 3. That is, the sucrose fatty acid ester is preferably one or more selected from the group consisting of a sucrose fatty acid monoester, a sucrose fatty acid diester, and a sucrose fatty acid triester.

By using a nonionic surfactant as the surfactant, when a complex is disintegrated, the nonionic surfactant functions as a load carrying additive, and an effect of imparting wear resistance to a lubricating oil composition is also secondarily exhibited.

When an anionic surfactant is used as the surfactant, from the viewpoint of more easily enhancing the stability of the S/O-type complex, a carboxylic acid-type surfactant obtained from a fatty acid having 8 to 24 carbon atoms as a raw material is preferably used.

From the same point of view, the number of carbon atoms of the fatty acid is more preferably 10 to 24.

The aliphatic group constituting the fatty acid may be saturated or unsaturated. The aliphatic group may be linear or branched, but is preferably linear.

Specific examples of compounds preferred as a carboxylic acid-type surfactant include octanoic acid (number of carbon atoms: 8), nonanoic acid (number of carbon atoms: 9), decanoic acid (number of carbon atoms: 10), undecanoic acid (number of carbon atoms: 11), lauric acid (number of carbon atoms: 12), tridecanoic acid (number of carbon atoms: 13), myristic acid (number of carbon atoms: 14), pentadecanoic acid (number of carbon atoms: 15), palmitic acid (number of carbon atoms: 16), margaric acid (number of carbon atoms: 17), stearic acid (number of carbon atoms: 18), oleic acid (number of carbon atoms: 18, number of double bonds: 1), nonadecanoic acid (number of carbon atoms: 19), arachidic acid (number of carbon atoms: 20), eicosenoic acid (number of carbon atoms: 20, number of double bonds: 1), heneicosylic acid (number of carbon atoms: 21), behenic acid (number of carbon atoms: 22), erucic acid (number of carbon atoms: 22, number of double bonds: 1), tricosanoic acid (number of carbon atoms: 23), and lignoceric acid (number of carbon atoms: 24).

By using a carboxylic acid-type surfactant as the surfactant, when the complex is disintegrated, the nonionic surfactant functions as a load carrying additive, and an effect of imparting wear resistance to a lubricating oil composition is also secondarily exhibited.

Here, in an aspect of the present invention, from the viewpoint of easily preparing a W/O-type emulsion which is a precursor of an S/O-type complex, the surfactant is preferably a hydrophobic surfactant.

Specifically, the HLB value is preferably 10 or less, more preferably 8 or less, further preferably 6 or less. The HLB value is also preferably more than 0, more preferably 1.0 or more, further preferably 1.5 or more. The upper limits and the lower limits in the numerical ranges can be arbitrarily combined. Specifically, the HLB value is preferably more than 0 and 10 or less, more preferably 1.0 to 8.0, further preferably 1.5 to 6.0.

Note that the HLB value means a hydrophilic-lipophilic balance (HLB) value calculated according to the Griffin method.

The surfactant is not limited to use of only a surfactant having an HLB value of 10 or less, and a surfactant having an HLB value of 10 or less and a surfactant having a HLB value more than 10 may be used in combination to the extent that an S/O-type complex can be prepared.

<Additive for forming complex>

An S/O-type complex of an aspect of the present invention may contain an additive for forming complex other than the active ingredient and the surfactant to the extent that the effect of the present invention is not impaired.
Examples of the additive for forming complex include stabilizers, such as polyvinyl alcohol and a higher alcohol having 10 to 30 carbon atoms (for example, hexadecanol).
An S/O-type complex of an aspect of the present invention may contain an additive that can be used in a process of producing the complex (for example, pH modifier and buffer).

[Method of producing complex]

The method of producing a complex of the present invention is a method of producing a solid-in-oil-type complex that contains an active ingredient and a surfactant, the method including the following steps (S 1) to (S4):

- step (S 1): a step of subjecting the active ingredient to at least one of dissolution and dispersion in water to prepare an aqueous liquid (W);
- step (S2): a step of dissolving the surfactant in an organic solvent to prepare an oily liquid (O);
- step (S3): a step of mixing the aqueous liquid (W) and the oily liquid (O) to prepare a water-in-oil-type emulsion; and
- step (S4): a step of removing the organic solvent from the water-in-oil-type emulsion, followed by drying,

> the active ingredient being one or more less-oil-soluble substances selected from the group consisting of a hardly-oil-soluble substance and an oil-insoluble substance,
> the less-oil-soluble substances having a function as an additive for lubricating oil.

<Step (S 1)>

In the step (S1), a less-oil-soluble substance which is an active ingredient is subjected to at least one of dissolution and dispersion in water to prepare an aqueous liquid (W).
When the less-oil-soluble substance is a water-soluble less-oil-soluble substance, the water-soluble less-oil-soluble substance is dissolved in water to prepare the aqueous liquid (W). Water as a solvent may be at a room temperature (25°C) or, from the viewpoint of enhancing the solubility of the water-soluble less-oil-soluble substance in water, may be a hot water of more than 25°C and less than 100°C (preferably 30°C to 90°C, more preferably 40°C to 80°C).
When the less-oil-soluble substance is one or more less-water-soluble substances selected from the group consisting of a hardly-water-soluble substance and a water-insoluble substance (particularly an insoluble substance), a step (S0) of subjecting the less-water-soluble less-oil-soluble substance to bead-mill pulverization is performed to make the less-water-soluble less-oil-soluble substance into nano-powder, which is then dispersed in water to prepare the aqueous liquid (W).
The concentration of the less-oil-soluble substance in the aqueous liquid (W) is not particularly limited as long as it is a concentration that substantially enables dissolution or dispersion of the less-oil-soluble substance, but the concentration is preferably 0.1 g/100 mL to 5.0 g/100 mL.

(Bead-mill pulverization step (S0))

In the bead-mill pulverization step (S0), the less-water-soluble less-oil-soluble substance is wet-pulverized in water as a liquid solvent to uniformly disperse nano-powder of the less-water-soluble less-oil-soluble substance in water.
Examples of the material of beads used in the bead-mill pulverization include titania, alumina, and zirconia, and zirconia is preferred. The material of a vessel used in the bead-mill pulverization is preferably the same as the material of beads.
The diameter of beads used is preferably 0.05 mm to 0.5 mm, more preferably 0.05 mm to 0.3 mm, further preferably 0.05 mm to 0.2mm.
In the bead-mill pulverization, the rate of filling of vessel with beads is preferably 20% by volume to 70% by volume, more preferably 25% by volume to 60% by volume, further preferably 30% by volume to 50% by volume.
In the bead-mill pulverization, the rotation speed of the bead-mill in the vessel is preferably 1,000 rpm to 5,000 rpm, more preferably 1,000 rpm to 4,000 rpm, further preferably 1,500 rpm to 3,000rpm.

The pulverization time with a bead mill is generally 30 minutes to 12 hours, preferably 1 hour to 5 hours, more preferably 1 hour to 4 hours.

After the bead-mill pulverization, coarse particles of the less-water-soluble less-oil-soluble substance are preferably removed with a filter paper (for example, No.2 filter paper).

By the bead-mill pulverization, not only the less-water-soluble less-oil-soluble substance, but also an insoluble substance, can be encapsulated in the complex.

When the less-water-soluble less-oil-soluble substance is not an insoluble substance, in the course of fining the less-water-soluble less-oil-soluble substance by ball-mill pulverization, dissolution of the less-water-soluble less-oil-soluble substance in water may be slightly promoted in some cases, but even in such a case, the less-water-soluble less-oil-soluble substance including both the portion dissolved in water and the portion dispersed in water can be encapsulated in the complex.

<Step (S2)>

In step (S2), a surfactant is dissolved in an organic solvent to prepare an oily liquid (O).

The organic solvent is not particularly limited as long as it is an organic solvent that can dissolve the surfactant and can be removed by distillation in the next step (S3), and examples thereof include an alcohol, an aliphatic hydrocarbon, an aromatic hydrocarbon, an ester-based solvent, and a halogen-based aliphatic hydrocarbon.

As the alcohol, one that undergoes layer separation with water at room temperature is preferred, and, for example, a C4 to C10 aliphatic alcohol is preferred.

An example of the aliphatic hydrocarbon is hexane.

An example of the aromatic hydrocarbon is toluene.

An example of the ester-based solvent is acetic acid ethyl ester.

An example of the halogen-based aliphatic hydrocarbon is methylene chloride.

One of the organic solvents may be used alone or two or more thereof may be used in combination.

The concentration of the surfactant in the oily liquid (O) is not particularly limited, but, from the viewpoint of easily preparing a W/O-type emulsion, the concentration is preferably two or more times the critical micelle concentration. Specifically, the concentration is preferably 5 g/100 mL to 25 g/100 mL.

<Step (S3)>

In the step (S3), the aqueous liquid (W) and the oily liquid (O) are mixed to prepare a water-in-oil-type emulsion.

Examples of a method for preparing a W/O-type emulsion include a method of stirring at a high speed with a homogenizer, a method of stirring with a stirrer, such as a propeller mixer or a disper, and a method by membrane emulsification using a porous membrane.

Regarding the ratio of the aqueous liquid (W) and the oily liquid (O) mixed, from the viewpoint of reducing the residual active ingredient that is not encapsulated in the complex, the ratio of the amount of the surfactant in the oily liquid (O) and the amount of the active ingredient in the aqueous liquid (W) mixed [(surfactant)/(active ingredient)] is preferably 2/1 or more, more preferably 5/1 or more, further preferably 10/1 or more, furthermore preferably 15/1 or more, still furthermore preferably 20/1 or more by mass.

Here, since the surfactant is an oil-soluble substance, an excess portion of the surfactant that is not used for forming the complex may be present to the extent that it does not negatively affect the lubricating oil composition. However, from the viewpoint of suppressing the excess portion of the surfactant that is not used for forming the complex, the amount of the surfactant is preferably reduced to the extent that the residual active ingredient that is not encapsulated in the complex can be reduced. From such a point of view, the ratio of the amount of the surfactant in the oily liquid (O) and the amount of the active ingredient in the aqueous liquid (W) mixed [(surfactant)/(active ingredient)] is preferably 100/1 or less.

The upper limits and the lower limits in the numerical ranges can be arbitrarily combined. Specifically, the ratio is preferably 2/1 to 100/1, more preferably 5/1 to 100/1, further preferably 10/1 to 100/1, furthermore preferably 15/1 to 100/1, still furthermore preferably 20/1 to 100/1.

<Step (S4)>

In the step (S4), the organic solvent is removed by distillation from the water-in-oil-type emulsion, followed by drying. A method of drying is not particularly limited. Examples thereof include lyophilization and drying under a reduced pressure, and lyophilization is preferred. In this step, water and the organic solvent are preferably substantially completely removed. Specifically, drying, for example, to the degree to give a water content of 1% or less as determined by the Karl Fischer method is preferred.

[Additive composition for lubricating oil]

The additive composition for lubricating oil of the present invention contains the S/O-type complex of the present invention.

The additive composition for lubricating oil of the present invention may be constituted only of the S/O-type complex of the present invention, but may contain a residual raw material that has not been used in forming a W/O-type emulsion in the course of preparing the S/O-type complex (specifically, an excess portion of the surfactant supplied as a raw material). The S/O-type complex may be diluted with a diluting oil.

The additive composition for lubricating oil may contain an additive for lubricating oil other than the S/O-type complex of the present invention. For example, an additive composition for lubricating oil of an aspect of the present invention may be an aspect of an additive package that contains the S/O-type complex of the present invention and an additive for lubricating oil other than the complex, and that is diluted with a diluting oil as required.

An example of the other additive for lubricating oil is an oil-soluble additive for lubricating oil that is conventionally generally used in a lubricating oil composition. Examples of the oil-soluble additive for lubricating oil include one or more selected from the group consisting of a metallic detergent, an anti-wear agent, an ashless dispersant, an extreme pressure agent, a pour point depressant, an antioxidant, an anti-foaming agent, a surfactant, a demulsifier, a friction modifier, an oiliness improver, a rust inhibitor , and a metal deactivator.

One of the additives for lubricating oil may be used alone or two or more thereof may be used in combination.

[Lubricating oil composition]

A lubricating oil composition of an aspect of the present invention contains a lubricant base oil and the S/O-type complex. The lubricating oil composition may further contain other additives for lubricating oil as described above.

A lubricating oil composition of another aspect of the present invention may contain a lubricant base oil and the additive composition for lubricating oil.

<Lubricant base oil>

Abase oil used in the lubricating oil composition is not particularly limited, and any base oil can be appropriately selected from a mineral oil and a synthetic oil that are conventionally used as a base oil of a lubricating oil and used.

Example of the mineral oil include an oil obtained by subjecting a lubricating oil fraction distillate, which is obtained by subjecting an atmospheric distillation residual oil, which is obtained by subjecting a crude oil to atmospheric distillation, to reduced-pressure distillation, to one or more treatments of a solvent deasphalting treatment; at least one treatment of solvent extraction and hydrocracking; and at least one dewaxing treatment of solvent dewaxing and catalytic dewaxing; a hydrorefining treatment; and the like, preferably to all the treatments, to refine the lubricating oil fraction distillate, or an oil produced by isomerizing a mineral oil-based wax; a GTL base oil produced by subjecting a residual wax in a GTL process (gas-to-liquid wax) to hydrogenation isomerization dewaxing. Among them, an oil obtained through a treatment by hydrorefining is preferred.

Examples of the synthetic oil include poly-$\alpha$-olefins, such as polybutene, an $\alpha$-olefin homopolymer, and a copolymer, such as , an ethylene-$\alpha$-olefin copolymer; various ethers, such as a polyphenyl ether; an alkylbenzene; and an alkylnaphthalene.

One of the base oils may be used alone or two or more thereof may be used in combination.

The viscosity of the base oil is not particularly limited, but the kinematic viscosity at 40°C is preferably 2 $mm^2/s$ or more, more preferably 2 $mm^2/s$ to 300 $mm^2/s$, further preferably 2 $mm^2/s$ to 100 $mm^2/s$.

The viscosity index of the base oil is preferably 50 or more, more preferably 80 or more, further preferably 100 or more, furthermore preferably 105 or more. When the viscosity index of the base oil is within the above range, good viscosity characteristics of the lubricating oil composition is easily achieved.

The values of kinematic viscosity at 40°C and viscosity index of the base oil are measured and calculated by a method described in Examples shown later.

In a lubricating oil composition of an aspect of the present invention, the content of the S/O-type complex is preferably 0.01 to 10% by mass, more preferably 0.1 to 5.0% by mass, further preferably 0.5 to 3.0% by mass based on the entire amount of the lubricating oil composition.

[Function and application of complex]

The complex of the present invention can be uniformly dispersed in a lubricant base oil with a less-oil-soluble substance used as an active ingredient. Thus, it is possible to use, as an additive for lubricating oil, a less-oil-soluble substance which has conventionally not been able to be used. Accordingly, substances that can be used as an additive

for lubricating oil can be expanded with no need to convert the structure for imparting oil solubility.

The complex of the present invention can release the less-oil-soluble substance which is an encapsulated substance by disintegrating the complex with a specific condition (for example, heat, ultraviolet ray, radical generation, pH, load, or stirring force) as a trigger.

Thus, in the state with no trigger exerted, the state in which the less-oil-soluble substance is encapsulated in the complex can be maintained, and thus, offsetting of a function due to, for example, interaction with another additive for lubricating oil contained in the lubricating oil composition can be suppressed, and the less-oil-soluble substance remains to be protected until a desired timing when the trigger is exerted. Then, once a trigger is exerted, the less-oil-soluble substance is released from the interior of the complex to perform a required function.

An example of the required function as used herein is, as described above, a function of one or more selected from the group consisting of a load carrying additive, a base number enhancer, an antioxidant, a passivating agent, a rust inhibitor, a corrosion inhibitor, a self-restoring agent, a coating agent, and an anti-foaming agent.

In the case where the active ingredient encapsulated in the complex is a less-oil-soluble substance that functions as a load carrying additive, when a high load is added to a contact surface between two members, the complex entering into the contact surface is disintegrated to release the encapsulated substance, thus allowing the encapsulated substance to perform a function as a load carrying additive to suppress seizure or the like in the contact surface.

In the case where the active ingredient encapsulated in the complex is a less-oil-soluble substance that functions as a base number enhancer, when the acidity of the lubricating oil composition increases, the complex is disintegrated to release the encapsulated substance, thus allowing the encapsulated substance to perform a function as a base number enhancer to reduce the acidity of the lubricating oil composition.

In the case where the active ingredient encapsulated in the complex is a less-oil-soluble substance that functions as an antioxidant, the complex is gradually destabilized by heat, pH variation, radical generation, and UV irradiation, and when a certain time elapses, the encapsulated substance is released to perform a function as an antioxidant.

In the case where the active ingredient encapsulated in the complex is a less-oil-soluble substance that functions as a passivating agent, a rust inhibitor, a corrosion inhibitor, a self-restoring agent, or a coating agent, the complex is gradually destabilized due to a high temperature exerted or the like, and when a certain time elapses, the encapsulated substance is released to perform the function. In the case where the active ingredient encapsulated in the complex is a less-oil-soluble substance that functions as a passivating agent, a rust inhibitor, a corrosion inhibitor, a self-restoring agent, or a coating agent, for example, by using the lubricating oil composition as a heat treating oil or the like, disintegration of the complex triggered by a high temperature exerted is likely to occur. Thus, the lubricating oil composition in which the complex is to be blended is preferably a heat treating oil. In addition, in the case of a rust inhibitor, a corrosion inhibitor, a self-restoring agent, or a coating agent, the encapsulated substance may be released due to a high load or pH variation to perform each function.

In the case where the active ingredient encapsulated in the complex is a less-oil-soluble substance that functions as an anti-foaming agent, when stirring force which is a cause of foaming is exerted and the stirring force is a specific value or higher, the complex is disintegrated to release the encapsulated substance, thus allowing the encapsulated substance to perform a function as an anti-foaming agent to prevent foaming of the lubricating oil composition.

Accordingly, the complex of the present invention provides a method described below.

(1) A method of using the complex of the present invention, the complex being used as an additive for lubricating oil.
(2) A method of using the complex of the present invention, the method including blending the complex into a lubricating oil composition.

Here, in the above (1), examples of the additive for lubricating oil include a load carrying additive, a base number enhancer, an antioxidant, a passivating agent, a rust inhibitor, a corrosion inhibitor, a self-restoring agent, a coating agent, and an anti-foaming agent.

In the above (2), examples of the lubricating oil composition include a gasoline engine oil, a diesel engine oil, an automatic transmission oil, an automotive gear oil, a gas engine heat pump/gas engine cogeneration system lubricating oil, a marine engine oil, a hydraulic fluid, a machine tool lubricating oil, a compressor oil, a turbine oil, a gear oil, a cutting fluid, a grinding fluid, a heat treating oil, a rolling oil, a drawing oil, a rust preventive oil, an insulating oil, a rubber process oil, an OA equipment bearing oil, a cleaning oil, and a grease.

[Aspect of the present invention provided]

According to an aspect of the present invention, the following [1] to [13] are provided.

[1] A solid-in-oil-type complex containing an active ingredient and a surfactant,
the active ingredient being one or more less-oil-soluble substances selected from the group consisting of a hardly-oil-soluble substance and an oil-insoluble substance, the less-oil-soluble substances having a function as an additive for lubricating oil.

[2] The complex according to the above [1], wherein the function as the additive for lubricating oil is a function of one or more selected from the group consisting of a load carrying additive, a base number enhancer, an antioxidant, a passivating agent, a rust inhibitor, a corrosion inhibitor, a self-restoring agent, a coating agent, and an anti-foaming agent.

[3] The complex according to the above [1] or [2], wherein the complex has a hydrodynamic diameter as determined as a dynamic light scattering method of 30 nm to 600 nm.

[4] The complex according to the above [1] to [3], wherein the surfactant is one or more selected from the group consisting of a nonionic surfactant and an anionic surfactant.

[5] An additive composition for lubricating oil, the additive composition containing the complex according to the above [1] to [4].

[6] A lubricating oil composition containing a lubricant base oil and the complex according to the above [1] to [4] or the additive composition for lubricating oil according to the above [5].

[7] A method of producing a solid-in-oil-type complex that contains an active ingredient and a surfactant,

the method including steps (S 1) to (S4) described below:

- step (S 1): a step of subjecting the active ingredient to at least one of dissolution and dispersion in water to prepare an aqueous liquid (W);
- step (S2): a step of dissolving the surfactant in an organic solvent to prepare an oily liquid (O);
- step (S3): a step of mixing the aqueous liquid (W) and the oily liquid (O) to prepare a water-in-oil-type emulsion;
- step (S4): a step of removing the organic solvent from the water-in-oil-type emulsion, followed by drying,

the active ingredient being one or more selected from the group consisting of a hardly-oil-soluble substance and an oil-insoluble substance,
the less-oil-soluble substances having a function as an additive for lubricating oil.

[8] The method of producing a complex according to the above [7], wherein the less-oil-soluble substances are one or more less-water-soluble substances selected from the group consisting of a hardly-water-soluble substance and a water-insoluble substance,
the method including a step (S0) of subjecting the less-oil-soluble substances to bead-mill pulverization.

[9] A method of using the complex according to the above [1] to [4], the complex being used as an additive for lubricating oil.

[10] A method of using the complex according to the above [1] to [4], the method including blending the complex into a lubricating oil composition.

[11] A method of using the complex according to the above [1] to [4], the active ingredient encapsulated in the complex being a less-oil-soluble substance that functions as a load carrying additive,
the method including disintegrating the complex in a lubricating oil composition to release the active ingredient in the complex, thus allowing the active ingredient to perform a function as a load carrying additive.

[12] A method of using the complex according to the above [1] to [4], the active ingredient encapsulated in the complex being a less-oil-soluble substance that functions as a base number enhancer,
the method including disintegrating the complex in a lubricating oil composition to release the active ingredient, thus allowing active ingredient to perform a function as a base number enhancer.

[13] A method of using the complex according to the above [1] to [4], one or more selected from a nonionic surfactant and a carboxylic acid-type surfactant being used as the surfactant,
the method including disintegrating the complex in a lubricating oil composition to allow one or more selected from the nonionic surfactant and the carboxylic acid-type surfactant to function as a load carrying additive.

[Aspect of use method of the present invention provided]

According to an aspect of the present invention, a use method of [U1] to [U11] and [U1a] to [U10a] described below are provided.

[U1] A method of using the complex of the present invention,
the method including disintegrating the complex in a lubricating oil composition to release a less-oil-soluble substance in the complex.

[U2] A method of using the complex of the present invention, the active ingredient encapsulated in the complex being a less-oil-soluble substance that functions as a load carrying additive,
the method including disintegrating the complex in a lubricating oil composition to release the active ingredient in the complex, thus allowing the active ingredient to perform a function as a load carrying additive.
[U3] A method of using the complex of the present invention, the active ingredient encapsulated in the complex being a less-oil-soluble substance that functions as a base number enhancer,
the method including disintegrating the complex in a lubricating oil composition to release the active ingredient, thus allowing the active ingredient to perform a function as a base number enhancer.
[U4] A method of using the complex of the present invention, the active ingredient encapsulated in the complex being a less-oil-soluble substance that functions as an antioxidant,
the method including disintegrating the complex in a lubricating oil composition to release the active ingredient, thus allowing the active ingredient to perform a function as an antioxidant.
[U5] A method of using the complex of the present invention, the active ingredient encapsulated in the complex being a less-oil-soluble substance that functions as one or more selected from the group consisting of a passivating agent, a rust inhibitor, a corrosion inhibitor, a self-restoring agent, and a coating agent,
the method including disintegrating the complex in a lubricating oil composition to release the active ingredient, thus allowing the active ingredient to perform a function as one or more selected from the group consisting of a passivating agent, a rust inhibitor, a corrosion inhibitor, a self-restoring agent, and a coating agent.
[U6] The use method according to the above [U5], wherein the lubricating oil composition is a heat treating oil.
[U7] A method of using the complex of the present invention, the active ingredient encapsulated in the complex being a less-oil-soluble substance that functions as one or more selected from the group consisting of a rust inhibitor, a corrosion inhibitor, a self-restoring agent, and a coating agent,
the method including disintegrating the complex in a lubricating oil composition to release the active ingredient, thus allowing the active ingredient to perform a function as one or more selected from the group consisting of a rust inhibitor, a corrosion inhibitor, a self-restoring agent, and a coating agent.
[U8] A method of using the complex of the present invention, the active ingredient encapsulated in the complex being a less-oil-soluble substance that functions as an anti-foaming agent,
the method including disintegrating the complex in a lubricating oil composition to release the active ingredient, thus allowing the active ingredient to perform a function as an anti-foaming agent.
[U9] A method of using the complex of the present invention, the complex having, together with the active ingredient, a less-oil-soluble marker substance encapsulated therein,
the method including disintegrating the complex in a lubricating oil composition to release the active ingredient and the marker substance from the interior of the complex, thus visually recognizing release of the active ingredient by the marker substance.
[U10] A method of using the complex of the present invention, the active ingredient encapsulated in the complex being a less-oil-soluble substance that functions as a base number enhancer, the complex having, together with the active ingredient, a less-oil-soluble marker substance encapsulated therein,
the method including disintegrating the complex in a lubricating oil composition to release the active ingredient and the marker substance from the interior of the complex, thus visual recognizing release of the active ingredient by the marker substance.
[U11] A method of using the complex of the present invention, one or more selected from a nonionic surfactant and a carboxylic acid-type surfactant being used as the surfactant,
the method including disintegrating the complex in a lubricating oil composition to allow one or more selected from the nonionic surfactant and the carboxylic acid-type surfactant to function as a load carrying additive.
[U1a] A method of using the complex of the present invention,
the method including blending the complex into a lubricating oil composition, and disintegrating the complex by one or more trigger selected from the group consisting of heat, ultraviolet ray, radical generation, pH, load, and stirring force to release a less-oil-soluble substance in the complex.
[U2a] A method of using the complex of the present invention, the active ingredient encapsulated in the complex being a less-oil-soluble substance that functions as a load carrying additive,
the method including blending the complex into a lubricating oil composition, and disintegrating the complex entering into a contact surface between two members filled with the lubricating oil composition by a load exerted to the contact surface to thereby release the active ingredient, thus suppressing seizure in the contact surface.
[U3a] A method of using the complex of the present invention, the active ingredient encapsulated in the complex being a less-oil-soluble substance that functions as a base number enhancer,
the method including blending the complex into a lubricating oil composition, and disintegrating the complex by an increased acidity of the lubricating oil composition to release the active ingredient, thus reducing the acidity of the lubricating oil composition.

[U4a] A method of using the complex of the present invention, the active ingredient encapsulated in the complex being a less-oil-soluble substance that functions as an antioxidant,
the method including blending the complex into a lubricating oil composition, and disintegrating the complex by one or more triggers selected from the group consisting of heat, pH variation, radical generation, and ultraviolet ray irradiation to release the active ingredient, thus suppressing oxidation of the lubricating oil composition.
[U5a] A method of using the complex of the present invention, the active ingredient encapsulated in the complex being a less-oil-soluble substance that functions as one or more selected from the group consisting of a passivating agent, a rust inhibitor, a corrosion inhibitor, a self-restoring agent, and a coating agent,
the method including blending the complex into a lubricating oil composition, and disintegrating the complex by heat to release the active ingredient, thus allowing the active ingredient to perform a function as one or more selected from the group consisting of a passivating agent, a rust inhibitor, a corrosion inhibitor, a self-restoring agent, and a coating agent.
[U6a] The use method according to the above [U5a], wherein the lubricating oil composition is a heat treating oil.
[U7a] A method of using the complex of the present invention, the active ingredient encapsulated in the complex being a less-oil-soluble substance that functions as one or more selected from the group consisting of a rust inhibitor, a corrosion inhibitor, a self-restoring agent, and a coating agent,
the method including blending the complex into a lubricating oil composition, and disintegrating the complex by one or more triggers selected from the group consisting of high load and pH variation to release the active ingredient, thus allowing the active ingredient to perform a function as one or more selected from the group consisting of a rust inhibitor, a corrosion inhibitor, a self-restoring agent, and a coating agent.
[U8a] A method of using the complex of the present invention, the active ingredient encapsulated in the complex being a less-oil-soluble substance that functions as an anti-foaming agent,
the method including blending the complex into a lubricating oil composition, and disintegrating the complex by stirring force in stirring the lubricating oil composition to release the active ingredient, thus suppressing foaming of the lubricating oil composition.
[U9a] A method of using the complex of the present invention, the complex having, together with the active ingredient, a less-oil-soluble marker substance encapsulated therein,
the method including blending the complex into a lubricating oil composition, and disintegrating the complex with degradation of the lubricating oil composition as a trigger to release the marker substance from the interior of the complex, thus visually recognizing degradation of the lubricating oil composition.
[U10a] A method of using the complex of the present invention, the active ingredient encapsulated in the complex being a less-oil-soluble substance that functions as a base number enhancer, the complex having, together with the active ingredient, a less-oil-soluble marker substance encapsulated therein,
the method including blending the complex into a lubricating oil composition, and disintegrating the complex with degradation of the lubricating oil composition due to accumulation of an acidic substance as a trigger to release the marker substance from the interior of the complex, thus visually recognizing degradation of the lubricating oil composition.

## Examples

The present invention is more specifically described with reference to the following examples, but the present invention is not to be limited to the following examples.

[Production Examples 1 to 19: preparation of complex]

According to Production Examples 1 to 19 described below, complexes A1 to A13, complexes B1 to B4, and complexes C1 to C2 were prepared.
Details of active ingredients and surfactants used in Production Examples 1 to 19 are shown below.

(Active ingredient)

· "Phosphoric acid": manufactured by FUJIFILM Wako Chemical Corporation, water-soluble less-oil-soluble substance (solubility in n-hexane (25°C): less than 0.01 g/100 mL)
· "Phosphorous acid": manufactured by FUJIFILM Wako Chemical Corporation, water-soluble less-oil-soluble substance (solubility in n-hexane (25°C): less than 0.01 g/100 mL)
"Molybdenum disulfide": manufactured by FUJIFILM Wako Chemical Corporation, insoluble substance

· "Carbon black": trade name "MA100", manufactured by Mitsubishi Chemical Corporation, insoluble substance
· "Giant fullerene (hereinafter referred to as fullerene)": trade name "G-MAX", manufactured by NC•Ecom, insoluble substance
"12 Molybdo(VI) phosphoric acid n-hydrate (hereinafter referred to as phosphomolybdic acid)": manufactured by FUJIFILM Wako Chemical Corporation, water-soluble less-oil-soluble substance
· "Guanidine carbonate": manufactured by Tokyo Chemical Industry Co., Ltd., water-soluble less-oil-soluble substance (solubility in n-hexane (25°C): less than 0.01 g/100 mL)
· "Aminoguanidine bicarbonate": manufactured by Tokyo Chemical Industry Co., Ltd., water-soluble less-oil-soluble substance (solubility in n-hexane (25°C): less than 0.01 g/100 mL)
· "Sodium nitrite": manufactured by FUJIFILM Wako Chemical Corporation, water-soluble less-oil-soluble substance
· "Zinc phosphate": manufactured by FUJIFILM Wako Chemical Corporation, water-soluble less-oil-soluble substance

(Surfactant)

· "Sucrose erucic acid ester (SE)": manufactured by Mitsubishi-Chemical Foods Corporation, HLB value: 2.0, mixture of sucrose erucic acid monoester, sucrose erucic acid diester, and sucrose erucic acid triester
· "Glycerol monooleate (GMO)": manufactured by Tokyo Chemical Industry Co., Ltd., HLB value: 4.3
· "Sorbitan monooleate (SMO)": manufactured by FUJIFILM Wako Chemical Corporation, HLB value: 4.9
· "Sorbitan trioleate (STO)": trade name "Span85", manufactured by Tokyo Chemical Industry Co., Ltd., HLB value: 3.0
· "Lauric acid (LA)": manufactured by Tokyo Chemical Industry Co., Ltd., HLB value: 3.8

<Production Example 1: preparation of complex A1>

· Active ingredient: phosphorous acid
· Surfactant: sucrose erucic acid ester (SE)

$$[(\text{Surfactant})/(\text{active ingredient})] = 30/1 \text{ (by mass)}$$

30g of SE was dissolved in 200 mL of hexane (room temperature: 25°C) to provide an SE hexane solution.
1g of Phosphorous acid was dissolved in 100 mL of water (room temperature: 25°C) to provide a phosphorous acid aqueous solution.

Then, the SE hexane solution and the phosphorous acid aqueous solution were mixed and stirred with a homogenizer at a rotation speed of 20,000 rpm for 1 minute, thus obtaining a W/O-type emulsion.
Then, hexane was removed by distillation from the W/O-type emulsion, followed by lyophilization, whereby a complex A1 was prepared.

<Production Example 2: preparation of complex A2>

· Active ingredient: phosphorous acid
·

Surfactant: sucrose erucic acid ester (SE) + glycerol monooleate (GMO)

·

$$[(\text{Surfactant})/(\text{active ingredient})] = 30/1 \text{ (by mass)}$$

A complex A2 was prepared in the same manner as in Production Example 1 except for using 20 g of SE and 10 g of GMO in place of 30 g of SE.

<Production Example 3: preparation of complex A3>

· Active ingredient: phosphoric acid
· Surfactant: sucrose erucic acid ester (SE)

[(Surfactant)/(active ingredient)] = 30/1 (by mass)

A complex A3 was prepared in the same manner as in Production Example 1 except for using 1 g of phosphoric acid in place of 1 g of phosphorous acid.

<Production Example 4: preparation of complex A4>

· Active ingredient: phosphoric acid

Surfactant: sucrose erucic acid ester (SE) + glycerol monooleate (GMO)

[(Surfactant)/(active ingredient)] = 30/1 (by mass)

A complex A4 was prepared in the same manner as in Production Example 2 except for using 1 g of phosphoric acid in place of 1 g of phosphorous acid.

<Production Example 5: preparation of complex A5>

· Active ingredient: phosphorous acid

Surfactant: sorbitan monooleate (SMO) + sorbitan trioleate (STO)

[(Surfactant)/(active ingredient)] = 30/1 (by mass)

A complex A5 was prepared in the same manner as in Production Example 1 except for using 15 g of SMO and 15 g of STO in place of 30 g of SE.

<Production Example 6: preparation of complex A6>

· Active ingredient: phosphoric acid
·

Surfactant: sorbitan monooleate (SMO) + sorbitan trioleate (STO)

·

[(Surfactant)/(active ingredient)] = 30/1 (by mass)

A complex A6 was prepared in the same manner as in Production Example 3 except for using 15 g of SMO

and 15 g of STO in place of 30 g of SE.

<Production Example 7: preparation of complex A7>

- Active ingredient: molybdenum disulfide
- Surfactant: sucrose erucic acid ester (SE)

$$[(\text{Surfactant})/(\text{active ingredient})] = \text{about } 90/1 \text{ (by mass)}$$

SE 30 g was dissolved in 200 mL of hexane to provide an SE hexane solution.
A dispersion of molybdenum disulfide powder was provided using RMB-08 bead mill apparatus manufactured by AIMEX CO., LTD. Specifically, in a 100-mL zirconia vessel, 1 g of molybdenum disulfide and 30 mL of water were placed and at the same time, zirconia beads having a particle diameter of 0.1 mm in an amount corresponding to a volume of 40 mL was placed. A ball mill pulverization was performed at a room temperature (25°C) at a rotation speed of 2,000 rpm for 2 hours to obtain a mixture liquid of zirconia beads and molybdenum disulfide powder. Then, while washing the mixture liquid with 70 mL of water, the mixture liquid was quickly filtered under reduced pressure with a No.2 filter paper to remove the zirconia beads and coarse molybdenum disulfide powder, thus providing a dispersion of molybdenum disulfide powder.
In view of the mass of molybdenum disulfide removed with the filter paper, about 0.3 g of molybdenum disulfide was considered to be dispersed in the dispersion of molybdenum disulfide powder.
Then, the SE hexane solution and the molybdenum disulfide powder dispersion were mixed, and the mixture was stirred with a homogenizer at a rotation speed of 20,000 rpm for 1 minute, thus obtaining a W/O-type emulsion.
Subsequently, hexane was removed by distillation from the W/O-type emulsion, followed by lyophilization, whereby a complex A7 was prepared.

<Production Example 8: preparation of complex A8>

· Active ingredient: carbon black
· Surfactant: sucrose erucic acid ester (SE)
·

$$[(\text{Surfactant})/(\text{active ingredient})] = \text{about } 90/1 \text{ (by mass)}$$

A complex A8 was prepared in the same manner as in Production Example 7 except for using 1 g of carbon black in place of 1 g of molybdenum disulfide.
In view of the mass of carbon black removed with the filter paper, about 0.3 g of carbon black was considered to be dispersed in the dispersion of carbon black.

<Production Example 9: preparation of complex A9>

· Active ingredient: fullerene
· Surfactant: sucrose erucic acid ester (SE)
·

$$[(\text{Surfactant})/(\text{active ingredient})] = \text{about } 90/1 \text{ (by mass)}$$

A complex A9 was prepared in the same manner as in Production Example 7 except for using 1 g of fullerene in place of 1 g of molybdenum disulfide.
In view of the mass of fullerene removed with the filter paper, about 0.3 g of fullerene was considered to be

dispersed in the dispersion of fullerene.

<Production Example 10: preparation of complex A10>

- · Active ingredient: phosphomolybdic acid
- · Surfactant: sucrose erucic acid ester (SE)
- ·

$$[(\text{Surfactant})/(\text{active ingredient})] = 30/1 \text{ (by mass)}$$

A complex A10 was prepared in the same manner as in Production Example 1 except for using 1 g of phosphomolybdic acid in place of 1 g of phosphorous acid.

<Production Example 11: preparation of complex A11>

- · Active ingredient: phosphomolybdic acid
- ·

Surfactant: sucrose erucic acid ester (SE) + glycerol monooleate (GMO)

- ·

$$[(\text{Surfactant})/(\text{active ingredient})] = 30/1 \text{ (by mass)}$$

Acomplex A11 was prepared in the same manner as in Production Example 2 except for using 1 g of phosphomolybdic acid in place of 1 g of phosphorous acid.

<Production Example 12: preparation of complex A12 >

- · Active ingredient: phosphorous acid
- · Surfactant: sucrose erucic acid ester (SE)

$$[(\text{Surfactant})/(\text{active ingredient})] = 20/1 \text{ (by mass)}$$

A complex A12 was prepared in the same manner as in Production Example 1 except for changing the amount of SE blended to 20 g.

<Production Example 13: preparation of complex A13>

- · Active ingredient: phosphorous acid
- · Surfactant: sucrose erucic acid ester (SE)
- ·

$$[(\text{Surfactant})/(\text{active ingredient})] = 10/1 \text{ (by mass)}$$

A complex A13 was prepared in the same manner as in Production Example 1 except for changing the amount

of SE blended to 10 g.

<Production Example 14: preparation of complex B1>

· Active ingredient: guanidine carbonate
· Surfactant: sucrose erucic acid ester (SE)

[(Surfactant)/(active ingredient)] = 30/1 (by mass)

SE 30 g was dissolved in 200 mL of hexane (room temperature: 25°C) to provide an SE hexane solution.

1 g of Guanidine carbonate was dissolved in 100 mL of water (room temperature: 25°C) to provide a guanidine carbonate aqueous solution.

Then, the SE hexane solution and the guanidine carbonate aqueous solution were mixed, and the mixture was stirred with a homogenizer at a rotation speed of 20,000 rpm for 1 minute, thus obtaining a W/O-type emulsion.

Subsequently, hexane was removed by distillation from the W/O-type emulsion, followed by lyophilization, whereby a complex B1 was prepared.

<Production Example 15: preparation of complex B2>

· Active ingredient: guanidine carbonate

Surfactant: sucrose erucic acid ester (SE) + lauric acid (LA)

[(Surfactant)/(active ingredient)] = 30/1 (by mass)

A complex B2 was prepared in the same manner as in Production Example 14 except for using 20 g of SE and 10 g of LA in place of 30 g of SE.

<Production Example 16: preparation of complex B3>

· Active ingredient: aminoguanidine bicarbonate
· Surfactant: sucrose erucic acid ester (SE)
·

[(Surfactant)/(active ingredient)] = 30/1 (by mass)

A complex B3 was prepared in the same manner as in Production Example 14 except for using 1 g of aminoguanidine bicarbonate in place of 1 g of guanidine carbonate and dissolving the aminoguanidine bicarbonate in 100 mL of hot water of 60°C.

<Production Example 17: preparation of complex B4>

· Active ingredient: aminoguanidine bicarbonate
·

Surfactant: sucrose erucic acid ester (SE) + lauric acid (LA)

·

$$[(\text{Surfactant})/(\text{active ingredient})] = 30/1 \ (\text{by mass})$$

A complex B4 was prepared in the same manner as in Production Example 15 except for using 1 g of aminoguanidine bicarbonate in place of 1 g of guanidine carbonate and dissolving the aminoguanidine bicarbonate in 100 mL of hot water of 60°C.

<Production Example 18: preparation of complex C 1>

· Active ingredient: sodium nitrite
· Surfactant: sucrose erucic acid ester (SE)
·

$$[(\text{Surfactant})/(\text{active ingredient})] = 30/1 \ (\text{by mass})$$

SE 30 g was dissolved in 200 mL of hexane (room temperature: 25°C) to provide an SE hexane solution.
1 g of Sodium nitrite was dissolved in 100 mL of water (room temperature: 25°C) to provide a sodium nitrite aqueous solution.
Then, the SE hexane solution and the sodium nitrite aqueous solution were mixed, and the mixture was stirred with a homogenizer at a rotation speed of 20,000 rpm for 1 minute, thus obtaining a W/O-type emulsion.
Subsequently, hexane was removed by distillation from a W/O-type emulsion, followed by lyophilization, whereby a complex C1 was prepared.

<Production Example 19: preparation of complex C2>

· Active ingredient: zinc phosphate
· Surfactant: sucrose erucic acid ester (SE)
·

$$[(\text{Surfactant})/(\text{active ingredient})] = 30/1 \ (\text{by mass})$$

A complex C2 was prepared in the same manner as in Production Example 17 except for using 1 g of zinc phosphate in place of 1 g of sodium nitrite.

[Examination 1: examination of particle diameter (hydrodynamic diameter) of complex]

For the complexes A1 to A9 and complexes B1 to B4, the particle diameter was measured.

(Measurement method of particle diameter)

The particle diameter (hydrodynamic diameter) was measured with Zetasizer Nano apparatus manufactured by Malvern by a dynamic light scattering (DLS) method at a wavelength of 633 nm and at a room temperature (25°C).

<Examples 1-1 to 1-13>

For the complexes A1 to A9 and complex B1 to B4, the particle diameter (hydrodynamic diameter) was measured.
Specifically, to squalane (2,6,10,15,19,23-hexamethyl tetracosane, manufactured by JUNSEI CHEMICAL CO., LTD., purity: 98% or more), 0.1% by mass of the complex was added to prepare a sample, and the sample was subjected to the measurement of particle diameter (hydrodynamic diameter).

<Comparative Examples 1-1 to 1-4>

The particle diameter (hydrodynamic diameter) was measured using squalane only as a reference (Comparative Example 1-1).

In addition, 0.1% by mass of each of various surfactants were each added to squalane to prepare a sample, and the sample was subjected the measurement of particle diameter (hydrodynamic diameter).

The results are shown in Table 1-1 and Table 1-2.

Table 1-1

| | Complex | Active ingredient | Surfactant | Particle diameter (nm) |
|---|---|---|---|---|
| Example 1-1 | A1 | Phosphorous acid | SE | 105.5 |
| Example 1-2 | A2 | Phosphorous acid | SE + GMO | 94.0 |
| Example 1-3 | A3 | Phosphoric acid | SE | 104.6 |
| Example 1-4 | A4 | Phosphoric acid | SE + GMO | 87.0 |
| Example 1-5 | A5 | Phosphorous acid | SMO + STO | 80.2 |
| Example 1-6 | A6 | Phosphoric acid | SMO + STO | 86.4 |
| Example 1-7 | A7 | Molybdenum disulfide | SE | 378.3 |
| Example 1-8 | A8 | Carbon black | SE | 388.6 |
| Example 1-9 | A9 | Fullerene | SE | 370.8 |
| Example 1-10 | B1 | Guanidine carbonate | SE | 180.6 |
| Example 1-11 | B2 | Guanidine carbonate | SE + LA | 133.2 |
| Example 1-12 | B3 | Aminoguanidine bicarbonate | SE | 207.1 |
| Example 1-13 | B4 | Aminoguanidine bicarbonate | SE + LA | 141.9 |

Table 1-2

| | Complex | Active ingredient | Surfactant | Particle diameter (nm) |
|---|---|---|---|---|
| Comparative Example 1-1 | - | - | - | Not detected |
| Comparative Example 1-2 | - | - | SE | Not detected |
| Comparative Example 1-3 | - | - | SMO | Not detected |
| Comparative Example 1-4 | - | - | LA | Not detected |

It is found from the results shown in Table 1-1 and Table 1-2 that all the complexes A1 to A9 and complexes B1 to B4 are nanoparticles of 400 nm or less.

[Examination 2: examination of uniform dispersibility in oil of complex]

For the complex A1 to A11, complex B1 to B4, and complex C1 to C2, examination of uniform dispersibility in oil was performed.

<Examples 2-1 to 2-17>

For the complexes A1 to A11, complexes B1 to B4, and complexes C1 to C2, the uniform dispersibility in oil was evaluated.

Specifically, to a 500 neutral fraction mineral oil (hereinafter also referred to as "500N mineral oil"), 1.0% by mass of the complex was added to prepare a sample for evaluating the uniform dispersibility in oil, and the uniform dispersibility in oil was evaluated by a method described later.

<Examples 2-18 to 2-20>

For the complexes A1, A12, and A13, the uniform dispersibility in oil was evaluated.

Specifically, 1.0% by mass of the complex was added to hexane to prepare a sample for evaluating the uniform dispersibility in oil, and the uniform dispersibility in oil was evaluated by the method described later.

<Comparative Examples 2-1 to 2-10>

For the active ingredients used in preparation of the complexes A1 to A11, complexes B1 to B4, and complexes C1 to C2, the uniform dispersibility in oil was evaluated.

Specifically, to a 500N mineral oil, an active ingredient was added in an amount shown in Table 2-2 to prepare a sample for evaluating the uniform dispersibility in oil, and the uniform dispersibility in oil was evaluated by the method described later.

(Evaluation of uniform dispersibility in oil)

Each sample prepared was allowed to stand at a room temperature (25°C) for 24 hours, and the uniform dispersibility in oil was visually evaluated.

The evaluation criteria were as follows.

- Grade A: being clear with no turbidity
- Grade B: clearness being sufficiently ensured with slight turbidity
- Grade C: clearness being not sufficient with some turbidity, or some precipitation being seen

The results are shown in Table 2-1 and Table 2-2.

Table 2-1

| | Base oil | Complex | Active ingredient | Surfactant | [(Surfactant) / (active ingredient)] (by mass) | Addition amount of complex (% by mass) | Uniform dispersibility in oil |
|---|---|---|---|---|---|---|---|
| Example 2-1 | 500N Mineral oil | A1 | Phosphorous acid | SE | 30/1 | 1.0 | A |
| Example 2-2 | | A2 | Phosphorous acid | SE + GMO | 30/1 | 1.0 | A |
| Example 2-3 | | A3 | Phosphoric acid | SE | 30/1 | 1.0 | A |
| Example 2-4 | | A4 | Phosphoric acid | SE + GMO | 30/1 | 1.0 | A |
| Example 2-5 | | A5 | Phosphorous acid | SMO + STO | 30/1 | 1.0 | A |
| Example 2-6 | | A6 | Phosphoric acid | SMO + STO | 30/1 | 1.0 | A |
| Example 2-7 | | A7 | Molybdenum disulfide | SE | about 90/1 | 1.0 | A |
| Example 2-8 | | A8 | Carbon black | SE | about 90/1 | 1.0 | A |
| Example 2-9 | | A9 | Fullerene | SE | about 90/1 | 1.0 | A |
| Example 2-10 | | A10 | Phosphomolybdic acid | SE | 30/1 | 1.0 | A |
| Example 2-11 | | A11 | Phosphomolybdic acid | SE + GMO | 30/1 | 1.0 | A |
| Example 2-12 | | B1 | Guanidine carbonate | SE | 30/1 | 1.0 | A |
| Example 2-13 | | B2 | Guanidine carbonate | SE + LA | 30/1 | 1.0 | A |
| Example 2-14 | | B3 | Aminoguanidine bicarbonate | SE | 30/1 | 1.0 | A |
| Example 2-15 | | B4 | Aminoguanidine bicarbonate | SE + LA | 30/1 | 1.0 | A |
| Example 2-16 | | C1 | Sodium Sulfite | SE | 30/1 | 1.0 | A |
| Example 2-17 | | C2 | Zinc phosphate | SE | 30/1 | 1.0 | A |
| Example 2-18 | Hexane | A1 | Phosphorous acid | SE | 30/1 | 1.0 | A |
| Example 2-19 | | A12 | Phosphorous acid | SE | 20/1 | 1.0 | A |
| Example 2-20 | | A13 | Phosphorous acid | SE | 10/1 | 1.0 | B |

Table 2-2

| | Base oil | Active ingredient | Addition amount of active ingredient (% by mass) | Uniform dispersibility in oil |
|---|---|---|---|---|
| Comparative Example 2-1 | 500N Mineral oil | Phosphorous acid | 0.03 | C |
| Comparative Example 2-2 | | Phosphoric acid | 0.03 | C |
| Comparative Example 2-3 | | Molybdenum disulfide | 0.01 | C |
| Comparative Example 2-4 | | Carbon black | 0.01 | C |
| Comparative Example 2-5 | | Fullerene | 0.01 | C |
| Comparative Example 2-6 | | Guanidine carbonate | 0.03 | C |
| Comparative Example 2-7 | | Aminoguanidine bicarbonate | 0.03 | C |
| Comparative Example 2-8 | | Sodium sulfite | 0.03 | C |
| Comparative Example 2-9 | | Zinc phosphate | 0.03 | C |
| Comparative Example 2-10 | | Phosphomolybdic acid | 0.03 | C |

It is found from the results shown in Table 2-1 that all the complexes A1 to A13, complexes B1 to B4, and complexes C1 to C2 have good uniform dispersibility in oil. In particular, all complexes that have a ratio [(surfactant)/(active ingredient)] of 20/1 or more by mass have extremely good uniform dispersibility in oil.

On the other hand, it is found from the results shown in Table 2-2 that all the less-oil-soluble substances and the insoluble substances which are active ingredients of the complex are not uniformly dispersed in oil. Thus, it is found that the less-oil-soluble substances and the insoluble substances which are active ingredients of the complex cannot be used as an additive for lubricating oil as they are.

[Examination 3: examination of wear resistance enhancing effect]

For the lubricating oil compositions in which the complexes A1 to A10, A12, and A13 are respectively blended, examination of the wear resistance enhancing effect was performed.

In the examination 3, poly-$\alpha$-olefin (PAO, kinematic viscosity at 40°C: 17 $mm^2/s$) was used as a base oil.

<Example 3-1 to 3-12>

To the base oil, 1.0% by mass of each of the complexes A1 to A10, A12, and A13 was added to prepare a lubricating oil composition, and the wear resistance was evaluated by a method described later.

<Comparative Example 3-1>

The base oil was used alone, and the wear resistance was evaluated by the method described later.

<Comparative Examples 3-2 to 3-6>

To the base oil, 1.0% by mass of each of various surfactants was added to prepare a lubricating oil composition, and the wear resistance was evaluated by the method described later.

(Evaluation of wear resistance)

The lubricating oil compositions of Examples 3-1 to 3-12 and Comparative Examples 3-1 to 3-6 were each subjected to a test with a ball-on-disc-type reciprocating kinetic friction tester (Bowden-Leben type) under conditions of a load of 80 N, a temperature of 100°C, a sliding rate of 15 mm/s, and a stroke of 15 mm, and a wear width of the disc after the test was measured. As a ball, SUJ2 (φ=10 mm, G20) was used, and as a disk, SUJ2 ($R_z \leq 1.0$ pm) was used.

A smaller wear width indicates a more superior wear resistance.

The results are shown in Table 3-1 and Table 3-2.

Table 3-1

| | Lubricating oil composition | | | | | | Evaluation result |
|---|---|---|---|---|---|---|---|
| | Base oil | Complex | Active ingredient | Surfactant | [(surfactant)/(active ingredient)] (by mass) | Addition amount of complex (% by mass) | Wear width (μm) |
| Example 3-1 | PAO | A1 | Phosphorous acid | SE | 30/1 | 1.0 | 244 |
| Example 3-2 | | A2 | Phosphorous acid | SE + GMO | 30/1 | 1.0 | 241 |
| Example 3-3 | | A3 | Phosphoric acid | SE | 30/1 | 1.0 | 237 |
| Example 3-4 | | A4 | Phosphoric acid | SE + GMO | 30/1 | 1.0 | 239 |
| Example 3-5 | | A5 | Phosphorous acid | SMO + STO | 30/1 | 1.0 | 249 |
| Example 3-6 | | A6 | Phosphoric acid | SMO + STO | 30/1 | 1.0 | 244 |
| Example 3-7 | | A7 | Molybdenum disulfide | SE | about 90/1 | 1.0 | no |
| Example 3-8 | | A8 | Carbon black | SE | about 90/1 | 1.0 | trace* |
| Example 3-9 | | A9 | Fullerene | SE | about 90/1 | 1.0 | no |
| Example 3-10 | | A10 | Phosphomolybdic acid | SE | 30/1 | 1.0 | 257 |
| Example 3-11 | | A12 | Phosphorous acid | SE | 20/1 | 1.0 | 251 |
| Example 3-12 | | A13 | Phosphorous acid | SE | 10/1 | 1.0 | 263 |
| * trace: it means that a wear width was not able to be measured but a minute trace was seen. | | | | | | | |

Table 3-2

| | Lubricating oil composition | | | | | Evaluation result |
|---|---|---|---|---|---|---|
| | Base oil | Complex | Active ingredient | Surfactant | Addition amount of surfactant (% by mass) | Wear width (μm) |
| Comparative Example 3-1 | PAO | | | - | - | 443 |
| Comparative Example 3-2 | | - | - | SE | 1.0 | 274 |
| Comparative Example 3-3 | | - | - | GMO | 1.0 | 318 |
| Comparative Example 3-4 | | - | - | SMO | 1.0 | 370 |
| Comparative Example 3-5 | | - | - | STO | 1.0 | 282 |
| Comparative Example 3-6 | | - | - | LA | 1.0 | 404 |

The followings are found from Table 3-1 and Table 3-2.

In comparison between Comparative Example 3-1 and Comparative Examples 3-2 to 3-6, it is found that the sucrose erucic acid ester (SE), glycerol monooleate (GMO), sorbitan monooleate (SMO), sorbitan trioleate (STO), and lauric acid (LA) which were used as the surfactant have a function to enhance the wear resistance.

Since, in all of Examples 3-1 to 3-12, the wear width is smaller than those in Comparative Examples 3-2 to 3-6, it is found that the complex is disintegrated with a high load exerted in the test acting as a trigger, and, in addition to various components used as the surfactant, the active ingredient in the complex contributes to the enhancement of the wear resistance.

In Examples 3-7 to 3-9 in which molybdenum disulfide, carbon black, and fullerene which are an insoluble substance were respectively used, wear was hardly seen, which indicates a highly superior wear resistance enhancing effect.

[Examination 4: examination about base number enhancer]

For lubricating oil compositions in which the complexes B1 to B4 were respectively blended, examination about the base number enhancer was performed.

<Example 4-1 to 4-4>

The complexes B1 to B4 were each added in an amount of 1.0% by mass to a mixture liquid of toluene, isopropyl alcohol (IPA), and water to prepare a model oil.

The ratio of toluene, isopropyl alcohol (IPA), and water mixed was toluene/IPA/water = 50/45/5 (by volume).

<Comparative Example 4-1>

The mixture liquid used in Examples 4-1 to 4-4 was used alone as a model oil.

<Comparative Example 4-2>

To the mixture liquid used in Examples 4-1 to 4-4, 1.0% by mass of sucrose erucic acid ester (SE) was added to prepare a model oil.

(Evaluation method)

First, the pH of the prepared model oil was measured (initial pH).

Then, according to JIS K2501:2003 "Petroleum products and lubricating oil -Determination of base number"

Section 5, the model oil was gradually inclined toward the acidic region, and when the model oil was converted into the alkaline region by outflow of the active ingredient due to disintegration of the complex, the pH at a point immediately before the inflection point between the alkaline region and the acidic region was taken as a post-titration pH. When the model oil was not converted into the alkali region, the pH at which the pH became plateau was taken as a post-titration pH.

The results are shown in Table 4.

Table 4

<table>
<tr><th></th><th>Base oil</th><th>Complex</th><th>Active ingredient</th><th>Surfactant</th><th>Addition amount (% by mass)</th><th>Initial pH</th><th>Post-titration pH</th></tr>
<tr><td>Example 4-1</td><td rowspan="6">Toluene/IPA/ water</td><td>B1</td><td>Guanidine carbonate</td><td>SE</td><td>1.0</td><td>7</td><td>8.1</td></tr>
<tr><td>Example 4-2</td><td>B2</td><td>Guanidine carbonate</td><td>SE + LA</td><td>1.0</td><td>7</td><td>8.6</td></tr>
<tr><td>Example 4-3</td><td>B3</td><td>Aminoguanidine bicarbonate</td><td>SE</td><td>1.0</td><td>7</td><td>8.3</td></tr>
<tr><td>Example 4-4</td><td>B4</td><td>Aminoguanidine bicarbonate</td><td>SE + LA</td><td>1.0</td><td>7</td><td>8.5</td></tr>
<tr><td>Comparative Example 4-1</td><td></td><td></td><td>-</td><td>-</td><td>7</td><td>3.6</td></tr>
<tr><td>Comparative Example 4-2</td><td></td><td>- -</td><td>SE</td><td>1.0</td><td>7</td><td>3.7</td></tr>
</table>

It became apparent from the results shown in Table 4 that the complexes B1 to B4 in the model oil were in the state where the active ingredient was encapsulated in the complex in an initial stage, but when the model oil was inclined toward the acidic region, the complex was disintegrated to allow the active ingredient to flow out to increase the pH.

Reference Signs List

1: complex
(X): active ingredient
(Y): surfactant
Ya: hydrophilic group
Yb: oleophilic group

## Claims

**1.** A solid-in-oil-type complex comprising an active ingredient and a surfactant,

the active ingredient being one or more less-oil-soluble substances selected from the group consisting of a hardly-oil-soluble substance and an oil-insoluble substance,
the less-oil-soluble substances having a function as an additive for lubricating oil.

**2.** The complex according to claim 1, wherein the function as an additive for lubricating oil is a function of one or more selected from the group consisting of a load carrying additive, a base number enhancer, an antioxidant, a passivating agent, a rust inhibitor, a corrosion inhibitor, a self-restoring agent, a coating agent, and an anti-foaming agent.

**3.** The complex according to claim 1 or 2, wherein the complex has a hydrodynamic diameter as determined by a dynamic light scattering method of 30 nm to 600 nm.

**4.** The complex according to any one of claims 1 to 3, wherein the surfactant is one or more selected from the group

consisting of a nonionic surfactant and an anionic surfactant.

**5.** An additive composition for lubricating oil, comprising the complex according to any one of claims 1 to 4.

**6.** A lubricating oil composition comprising a lubricant base oil and the complex according to any one of claims 1 to 4 or the additive composition for lubricating oil according to claim 5.

**7.** A method of producing a solid-in-oil-type complex that contains an active ingredient and a surfactant,

the method comprising steps (S 1) to (S4) described below:

· step (S 1): a step of subjecting the active ingredient to at least one of dissolution and dispersion in water to prepare an aqueous liquid (W);
· step (S2): a step of dissolving the surfactant in an organic solvent to prepare an oily liquid (O);
· step (S3): a step of mixing the aqueous liquid (W) and the oily liquid (O) to prepare a water-in-oil-type emulsion;
· step (S4): a step of removing the organic solvent from the water-in-oil-type emulsion, followed by drying,

the active ingredient being one or more less-oil-soluble substances selected from the group consisting of a hardly-oil-soluble substance and an oil-insoluble substance,
the less-oil-soluble substances having a function as an additive for lubricating oil.

**8.** The method of producing a complex according to claim 7, wherein the less-oil-soluble substances are one or more less-water-soluble substances selected from the group consisting of a hardly-water-soluble substance and a water-insoluble substance,
the method further comprising a step (S0) of subjecting the less-oil-soluble substances to bead-mill pulverization.

**9.** A method of using the complex according to any one of claims 1 to 4, the complex being used as an additive for lubricating oil.

**10.** A method of using the complex according to any one of claims 1 to 4, the method comprising blending the complex into a lubricating oil composition.

**11.** A method of using the complex according to any one of claims 1 to 4, the active ingredient encapsulated in the complex being a less-oil-soluble substance that functions as a load carrying additive,
the method comprising disintegrating the complex in a lubricating oil composition to release the active ingredient in the complex, thus allowing the active ingredient to perform a function as a load carrying additive.

**12.** A method of using the complex according to any one of claims 1 to 4, the active ingredient encapsulated in the complex being a less-oil-soluble substance that functions as a base number enhancer,
the method comprising disintegrating the complex in a lubricating oil composition to release the active ingredient, thus allowing the active ingredient to perform a function as a base number enhancer.

**13.** A method of using the complex according to any one of claims 1 to 4, one or more selected from a nonionic surfactant and a carboxylic acid-type surfactant being used as the surfactant,
the method comprising disintegrating the complex in a lubricating oil composition to allow one or more selected from the nonionic surfactant and the carboxylic acid-type surfactant to function as a load carrying additive.

[Fig. 1]

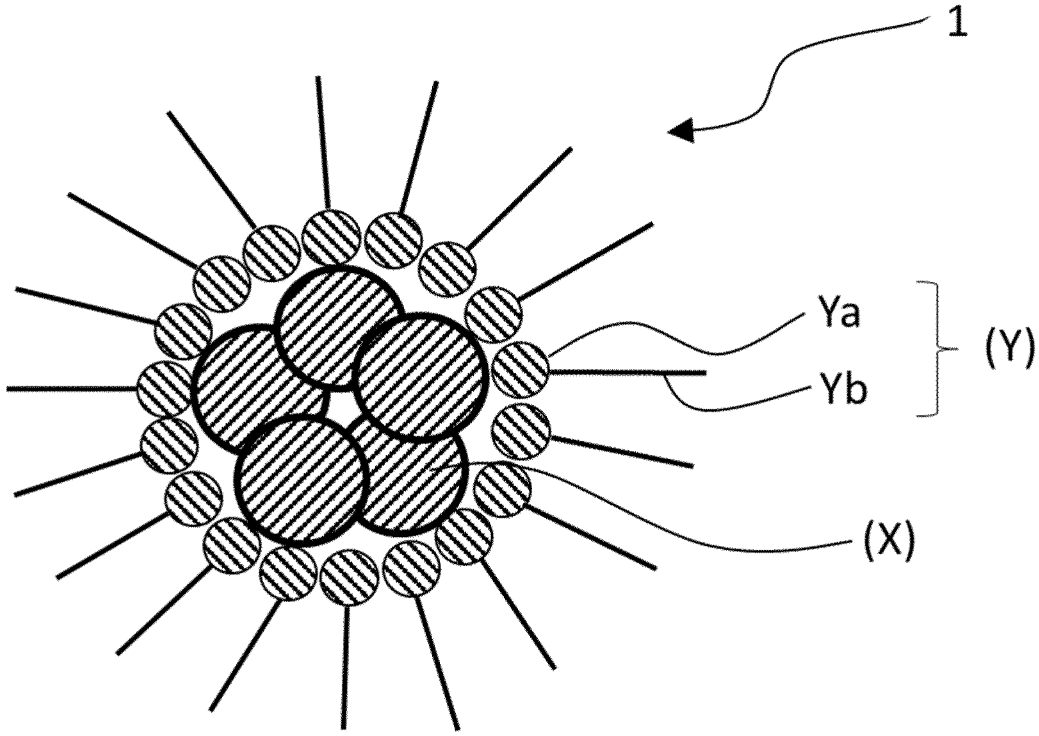

## INTERNATIONAL SEARCH REPORT

International application No.
**PCT/JP2021/036292**

### A. CLASSIFICATION OF SUBJECT MATTER

***C10M 171/00***(2006.01)i; ***C10M 177/00***(2006.01)i; *C10N 20/06*(2006.01)n; *C10N 30/06*(2006.01)n; *C10N 30/10*(2006.01)n; *C10N 30/12*(2006.01)n; *C10N 30/14*(2006.01)n; *C10N 30/18*(2006.01)n; *C10N 40/02*(2006.01)n; *C10N 40/04*(2006.01)n; *C10N 40/08*(2006.01)n; *C10N 40/12*(2006.01)n; *C10N 40/16*(2006.01)n; *C10N 40/20*(2006.01)n; *C10N 40/22*(2006.01)n; *C10N 40/24*(2006.01)n; *C10N 40/25*(2006.01)n; *C10N 40/30*(2006.01)n; *C10N 50/10*(2006.01)n

FI: C10M171/00; C10M177/00; C10N20:06 Z; C10N40:25; C10N40:04; C10N40:08; C10N40:30; C10N40:12; C10N40:22; C10N40:20 A; C10N40:16; C10N40:02; C10N50:10; C10N30:06; C10N30:10; C10N30:14; C10N30:12; C10N30:18; C10N40:24 Z

According to International Patent Classification (IPC) or to both national classification and IPC

### B. FIELDS SEARCHED

Minimum documentation searched (classification system followed by classification symbols)

C10M171/00; C10M177/00; C10N20/06; C10N30/06; C10N30/10; C10N30/12; C10N30/14; C10N30/18; C10N40/02; C10N40/04; C10N40/08; C10N40/12; C10N40/16; C10N40/20; C10N40/22; C10N40/24; C10N40/25; C10N40/30; C10N50/10

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2000-24487 A (THE NISSHIN OIL MILLS, LTD.) 25 January 2000 (2000-01-25) claims 1-9, paragraphs [0001], [0005]-[0034] | 1-7, 9-10 |
| A | | 8, 11-13 |
| X | JP 2000-157168 A (THE NISSHIN OIL MILLS, LTD.) 13 June 2000 (2000-06-13) claims 1-16, paragraphs [0001], [0007]-[0026] | 1-7, 9-10 |
| A | | 8, 11-13 |
| X | JP 61-263202 A (NOK CORP.) 21 November 1986 (1986-11-21) claims 1-6, page 1, lower right column, lines 13-16, page 2, lower left column, line 2 to page 3, lower left column, line 20, examples 1, 2 | 1, 3-7, 9-10 |
| A | | 2, 8, 11-13 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 November 2021** | **14 December 2021** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
PCT/JP2021/036292

C. DOCUMENTS CONSIDERED TO BE RELEVANT

| Category* | Citation of document, with indication, where appropriate, of the relevant passages | Relevant to claim No. |
| --- | --- | --- |
| A | JP 63-116407 A (NOK CORP.) 20 May 1988 (1988-05-20) claims 1-3 | 1-13 |

Form PCT/ISA/210 (second sheet) (January 2015)

**INTERNATIONAL SEARCH REPORT**
**Information on patent family members**

International application No.
**PCT/JP2021/036292**

| Patent document cited in search report | Publication date (day/month/year) | Patent family member(s) | Publication date (day/month/year) |
|---|---|---|---|
| JP 2000-24487 A | 25 January 2000 | (Family: none) | |
| JP 2000-157168 A | 13 June 2000 | US 6190680 B1 claims 1-16, column 1, lines 5-14, column 2, line 53 to column 12, line 14 | |
| JP 61-263202 A | 21 November 1986 | (Family: none) | |
| JP 63-116407 A | 20 May 1988 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017088651 A